# EUROPÄISCHE PATENTANMELDUNG

(11) **EP 2 902 722 A1**
(43) Veröffentlichungstag der Anmeldung: **05.08.2015**
(21) Anmeldenummer: 15150287.9
(22) Anmeldetag: 07.01.2015
(51) Int. Cl.: F24J 2/00, F24D 11/00

(54) **Solarspeicher**

(30) Priorität: 31.01.2014 AT 742014
(71) Anmelder: Vaillant GmbH, 42859 Remscheid (DE)
(72) Erfinder: Severin, Sascha, 44791 Bochum (DE); vom Stein, Jürgen, 42477 Radevormwald (DE); Schicke, Sven, 42553 Velbert (DE); Ruthenberg, Christian, 42399 Wuppertal (DE); Mathes, Burkhard, 42657 Solingen (DE)
(74) Vertreter: Hocker, Thomas

(57) **Zusammenfassung**

Bei einer Heizungsanlage mit zumindest einem Solarkollektor (1), der mit einem Wärmetauscher (3) in einem Wärmespeicher (2) über einen Solarkreislauf (7) wärmeleitend verbunden ist, wobei im Solarkreislauf (7) eine Umwälzpumpe (5) für die Förderung des Fluids vorhanden ist, ist im Solarkreislauf (7) stromab des Solarkollektors (1) oder in einer Bypassleitung (8) zum Solarkollektor (1) ein Elektrodurchlauferhitzer (4) angeordnet.

## Beschreibung

Die Erfindung betrifft eine Heizungsanlage mit zumindest einem Solarkollektor und einem Wärmespeicher.

Bei einer Heizungsanlage mit Solarkollektoren und Wärmespeichern strömt ein Fluid in einem Solarkreislauf mit diesen Solarkollektoren und Wärmespeichern. Im Solarkollektor wird das Fluid erwärmt und gibt die aufgenommene Wärme im Wärmespeicher ab. Insbesondere nachts kann keine solare Strahlungswärme aufgenommen werden. Ferner besteht das Problem, dass bei kalten Umgebungstemperaturen das Fluid Wärme vom Solarkollektor an die Umgebung abgibt statt Wärme aufzunehmen. Deshalb wird in diesen Fällen die Durchströmung des Kollektors unterbunden. Soll der Wärmespeicher dennoch beheizt werden, so wird gemäß dem Stand der Technik ein Elektroheizers in einem Tauchrohr im Wärmespeicher eingeschaltet und die Zirkulation im Solarkreislauf unterbunden.

Hierbei ergibt sich das Problem, dass Tauchrohre für Elektroheizer in Solarspeichern kostenaufwendig und fehleranfällig zu fertigen sind. Des Weiteren ist ein Speicher ohne Tauchrohr im Nachhinein nicht durch einen Elektroheizer erweiterbar. Ein zusätzlicher Nachteil ist ein möglicher erhöhter Kalkausfall am Elektroheizer.

Aufgabe der Erfindung ist daher, eine kostengünstige, zuverlässige und nachrüstbare elektrische Beheizung eines Solarspeichers zu ermöglichen.

Das Problem wird erfindungsgemäß dadurch gelöst, indem der Elektroheizer in den Solarkreis integriert wird. Die Integration findet vorzugsweise über eine Bypassschaltung statt, welche durch ein Dreiwegeventil geschaltet wird. Durch diese Integration nutzt der Elektroheizer das Solarfluid als Wärmeträgermedium und die Solarrohrschlange als Wärmeübertrager im Speicher. Der Einsatz im Solarfluid reduziert den Kalkausfall am Elektroheizer auf ein Minimum.

Die Erfindung wird nun anhand der Figuren detailliert erläutert. Hierbei zeigen:
- Figur 1:: Eine erste Ausgestaltung der erfindungsgemäßen Heizungsanlage
- Figur 2:: Eine alternative Ausgestaltung der erfindungsgemäßen Heizungsanlage

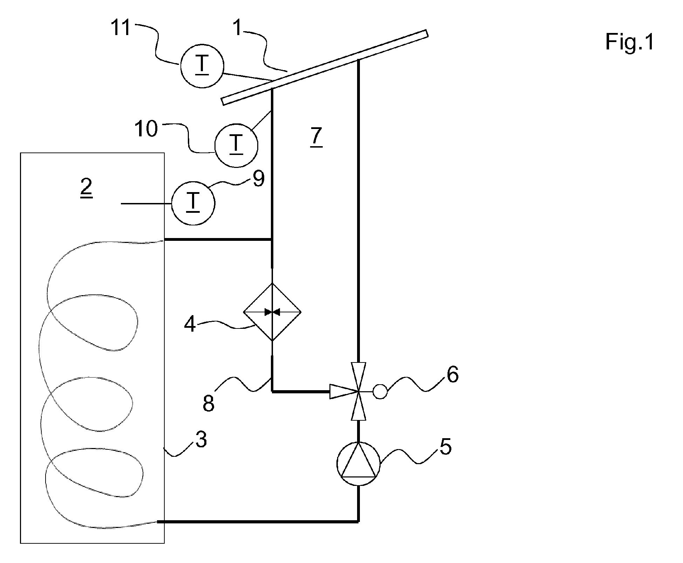

Figur 1 zeigt eine Heizungsanlage mit einem Solarkollektor 1, der mit einem Wärmetauscher 3 in einem Wärmespeicher 2 über einen Solarkreislauf 7 wärmeleitend verbunden ist. Im Solarkreislauf 7 ist eine Umwälzpumpe 5 für die Förderung des Fluids stromab des Wärmetauschers 3 und stromauf des Solarkollektors 1 integriert. Ein Dreiwegeventil 6 ist zwischen der Umwälzpumpe 5 und dem Solarkollektor 1 angeordnet. Dieses Dreiwegeventil 6 ist auf der Eingangsseite über die Umwälzpumpe 5 mit dem Wärmetauscher 3 in dem Wärmespeicher 2 verbunden. An einem Ausgang ist das Dreiwegeventil 6 mit dem Solarkollektor 1 verbunden. Der andere Ausgang ist mit einer Bypassleitung 8 verbunden. Die Bypassleitung 8 umgeht den Solarkollektor 1 und mündet in die Verbindung zwischen dem Solarkollektor 1 und dem Wärmetauscher 3. In der Bypassleitung 8 ist ein Elektrodurchlauferhitzer 4 angeordnet. Im Wärmespeicher 2 befindet sich ein erster Temperatursensor 9. Stromab des Solarkollektors ist ein zweiter Temperatursensor 10 im Solarkreislauf 7 angeordnet. Im Solarkollektor 1 selbst ist ein dritter Temperatursensor 11 angeordnet.

Steht Solarwärme zur Verfügung, so kann diese vom Solarkollektor 1 auf den Wärmespeicher 2 über den Wärmetauscher 3 übertragen werden. Die Pumpe 5 fördert hierbei das Fluid im Solarkreislauf 7, wobei das Dreiwegeventil 6 derart geschaltet ist, dass die Bypassleitung 8 nicht durchströmt wird. Durch Variation der Förderleistung der Umwälzpumpe 5 kann die Temperatur des Fluids stromab des Solarkollektors 1 beeinflusst werden; je weniger Fluid gefördert wird, desto höher wird - bei konstanter Sonneneinstrahlung - die Temperatur. Mittels des zweiten Temperatursensors 10 stromab des Solarkollektors 1 kann die Temperatur des Fluids gemessen werden und dementsprechend eine Regelung erfolgen. Ist die Temperatur des Fluids am zweiten Temperatursensor 10 geringer als die Temperatur im Wärmespeicher 2, so wird die Förderleistung der Umwälzpumpe 5 reduziert, bis das Fluid um eine vorgegebene Temperaturdifferenz größer als die mittels des ersten Temperatursensors 9 gemessene Temperatur im Wärmespeicher 2 ist. Ist durch Reduktion der Förderleistung der Umwälzpumpe 5 kein wirtschaftlicher Heizbetrieb mehr möglich, so schaltet das Dreiwegeventil 6 um, so dass anstelle des Solarkollektors 1 die Bypassleitung 8 durchströmt wird. Die Wärme wird nun vom Elektrodurchlauferhitzer 4 in der Bypassleitung 8 auf das Fluid übertragen. Der Heizvorgang wird beendet, wenn mittels des ersten Temperatursensors 9 im Wärmespeicher 2 eine vorgegebene Temperatur gemessen wird und der Wärmespeicher 2 ausreichend aufgeheizt ist.

Um festzustellen, ob während des elektrischen Heizvorgangs wieder ausreichend Solarwärme zur Verfügung steht, kann optional in bestimmten Zeitabständen der Elektrodurchlauferhitzer 4 ausgeschaltet und das Dreiwegeventil 6 umgeschaltet werden. Ist die mittels des zweiten Temperatursensors 10 gemessene Temperatur immer noch zu gering, so wird wieder auf elektrischen Heizbetrieb in der Bypassleitung umgeschaltet; ansonsten verbleibt es beim Heizbetrieb mittels Solarkollektor 1.

Alternativ kann mittels des dritten Temperatursensors 11 im Solarkollektor 1 festgestellt werden, dass wieder ausreichend Solarwärme zur Verfügung steht. Dies ist der Fall, wenn eine Temperatur erfasst, die höher als ein fester (zum Beispiel größer 70°C) oder relativer Schwellwert (zum Beispiel 10 K über Speichertemperatur) ist. Auch dann wird der Elektrodurchlauferhitzer 4 ausgeschaltet und das Dreiwegeventil 6 umgeschaltet.

Ist der Wärmespeicher 2 ausreichend geladen, so wird der Heizvorgang beendet. Jedoch wird mittels der Umwälzpumpe 5 Stagnation im Solarkollektor 1 vermieden.

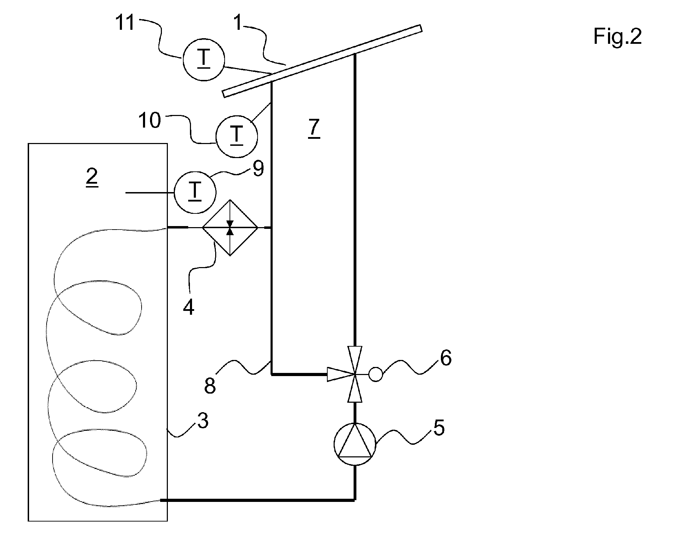

Figur 2 zeigt eine alternative Ausgestaltung der erfindungsgemäßen Heizungsanlage, bei welcher der Elektrodurchlauferhitzer 8 im Solarkreislauf 7 stromab des Solarkollektors 1 angeordnet ist und eine Bypassleitung 8 parallel zum Solarkollektor 1 angeordnet ist. Der zweiten Temperatursensors 10 befindet sich in nun vorzugsweise stromab des Elektrodurchlauferhitzers 8.

Droht Auskühlung oder kein wirtschaftlicher Betrieb über den Solarkollektor 1 bei ausgeschaltetem Elektrodurchlauferhitzer 8, so wird der Solarkollektor 1 mittels der Bypassleitung 8 überbrückt, indem das Dreiwegeventil 6 bezüglich des Ausgangs umgeschaltet wird. Die thermische Speicherladung erfolgt dann mittels des Elektrodurchlauferhitzers 8. Optional kann Wärme sowohl über den Solarkollektor 1, als auch den Elektrodurchlauferhitzers 8 gleichzeitig eingebracht werden.

Optional kann der Bypass 8 entfallen, um Kosten zu sparen.

Sowohl die Heizungsanlage nach Figur 1, als auch diejenige nach Figur 2 kann optional über ein kontinuierlich verstellbares Dreiwegeventils 6 (Mischventil) verfügen, so dass die Öffnung zum Ausgang mit dem Solarkollektor 1 sowie zum Ausgang mit der Bypassleitung 8 kontinuierlich verstellbar sind. Damit kann der Anteil des geförderten Fluids in Richtung des Solarkollektor 1 sowie der Bypassleitung 8 kontinuierlich verändert werden kann, so dass beispielsweise bei geringem Solareintrag wenig Fluid durch den Solarkollektor 1 strömt und dementsprechend dennoch ausreichend Wärme aufgenommen werden kann, um die Solltemperatur zu erreichen. Erhöht sich der Solareintrag, so kann der Anteil des Fluids, der durch den Solarkollektor geleitet wird, erhöht werden, während der Anteil der elektrischen Zuheizung reduziert wird.

Über die Erfassung der Fluidtemperatur durch den zweiten Temperatursensor 10 kann der Wärmespeicher 2 bedarfsgerecht mit beliebigen Temperaturen bedarfsgerecht geladen werden, indem der Fluidstrom im Solarkreislauf 7 entsprechend reguliert wird.

Durch die Erfindung ist es möglich, ein bestehendes System ohne Elektroheizer nachträglich zu erweitern. Die Fertigung des Wärmespeichers wird durch diese Lösung erheblich vereinfacht.

Es ist keine Regelung der elektrischen Heizleistung erforderlich, weil der gesamte Wärmespeicher 2 aufgeladen wird und somit keine Verbrühungsgefahr besteht. Selbst bei maximaler elektrischer Heizleistung wird nur der Leitungsbereich zwischen Elektrodurchlauferhitzer 8 und Wärmespeicher 2 stark erhitzt, so dass der Nutzer damit nicht in Berührung kommt.

Durch die Positionierung im Solarkreislauf 7 sind keine Trinkwasseranforderungen (Hygiene) an den Elektrodurchlauferhitzer 8 zu stellen. Das Verkalkungspotential im Trinkwasserbereich eines Wärmespeichers 2 ist ebenfalls geringer.

### Bezugszeichenliste

Solarkollektor 1
Wärmespeicher 2
Wärmetauscher 3
Elektrodurchlauferhitzer 4
Umwälzpumpe 5
Dreiwegeventil 6
Solarkreislauf 7
Bypassleitung 8
erster Temperatursensor 9
zweiter Temperatursensor 10
dritter Temperatursensor 11.

## Patentansprüche

1. Heizungsanlage mit zumindest einem Solarkollektor (1), der mit einem Wärmetauscher (3) in einem Wärmespeicher (2) über einen Solarkreislauf (7) wärmeleitend verbunden ist, wobei im Solarkreislauf (7) eine Umwälzpumpe (5) für die Förderung des Fluids vorhanden ist, **dadurch gekennzeichnet, dass** im Solarkreislauf (7) stromab des Solarkollektors (1) oder in einer Bypassleitung (8) zum Solarkollektor (1) ein Elektrodurchlauferhitzer (4) angeordnet ist.

2. Heizungsanlage nach Anspruch 1, **dadurch gekennzeichnet, dass** der Elektrodurchlauferhitzer (4) im Solarkreislauf (7) stromab des Solarkollektors (1) angeordnet ist und eine Bypassleitung (8) parallel zum Solarkollektor (1) angeordnet ist.

3. Heizungsanlage nach einem der Ansprüche 1 oder 2, **dadurch gekennzeichnet, dass** stromauf des Solarkollektors (1) ein Dreiwegeventil (6) angeordnet ist, welches auf der Eingangsseite mit dem Wärmetauscher (3) in dem Wärmespeicher (2) verbunden ist und welches an einem Ausgang mit dem Solarkollektor (1) sowie an dem anderen Ausgang mit der Bypassleitung (8) verbunden ist.

4. Heizungsanlage nach Anspruch 3, **dadurch gekennzeichnet, dass** das Dreiwegeventil (6) derart gestaltet ist, dass die Öffnung zum Ausgang mit dem Solarkollektor (1) sowie zum Ausgang mit der Bypassleitung (8) kontinuierlich verstellbar ist, so dass der Anteil des geförderten Fluids in Richtung des Solarkollektor (1) sowie der Bypassleitung (8) kontinuierlich verändert werden kann.

5. Heizungsanlage nach einem der vorhergehenden Ansprüche, **dadurch gekennzeichnet, dass** im Wärmespeicher (2) ein Temperatursensor (9) angeordnet ist.

6. Verfahren zum Betrieben einer Heizungsanlage mit zumindest einem Solarkollektor (1), der mit einem Wärmetauscher (3) in einem Wärmespeicher (2) über einen Solarkreislauf (7) wärmeleitend verbunden ist, wobei im Solarkreislauf (7) eine Umwälzpumpe (5) für den Förderung des Fluids vorhanden ist und in einer Bypassleitung (8) zum Solarkollektor (1) ein Elektrodurchlauferhitzer (4) angeordnet ist, mit einem ersten Temperatursensor (9) im Wärmespeicher (2) und einem zweiten Temperatursensor (10) im Solarkreislauf (7) stromab des Solarkollektors (1) **dadurch gekennzeichnet, dass** mittels des zweiten Temperatursensors (10) die Temperatur des Fluids gemessen wird und mit der Temperatur des ersten Temperatursensors (9) verglichen wird.

7. Verfahren zum Betrieben einer Heizungsanlage nach Anspruch 6, **dadurch gekennzeichnet, dass** wenn die Temperatur des Fluids am zweiten Temperatursensor (10) geringer als die Temperatur am ersten Temperatursensor (9) ist oder letztgenannte Temperatur nicht um eine vorgegebene Temperaturdifferenz überschreitet, das Dreiwegeventil (6) in Richtung Bypassleitung (8) umgeschaltet und der Elektrodurchlauferhitzer (4) eingeschaltet wird.

8. Verfahren zum Betrieben einer Heizungsanlage nach Anspruch 7, **dadurch gekennzeichnet, dass** der Heizvorgang des Elektrodurchlauferhitzers (4) beendet wird, wenn mittels des ersten Temperatursensors (9) im Wärmespeicher (2) eine vorgegebene Temperatur gemessen wird.

9. Verfahren zum Betrieben einer Heizungsanlage nach Anspruch 7, **dadurch gekennzeichnet, dass** der Heizvorgang des Elektrodurchlauferhitzers (4) in bestimmten Intervallen beendet und das Dreiwegeventil (6) umgeschaltet wird.

10. Verfahren zum Betrieben einer Heizungsanlage nach Anspruch 7, **dadurch gekennzeichnet, dass** der Heizvorgang des Elektrodurchlauferhitzers (4) beendet und das Dreiwegeventil (6) umgeschaltet wird, wenn ein dritter Temperatursensor (11) im Solarkollektor (1) eine Temperatur erfasst, die höher als ein fester oder relativer Schwellwert ist.
